# EUROPEAN PATENT SPECIFICATION

(11) **EP 2 701 374 B1**
(45) Date of publication and mention of the grant of the patent: **13.01.2016**
(21) Application number: 12181513.8
(22) Date of filing: 23.08.2012
(51) Int. Cl.: H04M 15/00, H04W 4/24

(54) **Telephone system and method**
Telefonsystem und Verfahren
Système et procédé de téléphonie

(43) Date of publication of application: 26.02.2014
(73) Proprietor: Mehlhorn, Arndt, 08013 Barcelona (ES)
(72) Inventor: Mehlhorn, Arndt, 08013 Barcelona (ES)
(74) Representative: Koepe, Gerd L.

(56) References cited:
- WO-A1-03/009622
- WO-A1-2005/112484
- FR-A1- 2 858 150
- US-A1- 2007 037 550

## Description

### FIELD OF THE INVENTION

The invention relates to a device, method and computer program product for a telephone system and more particularly to a device, method and computer program product for determining if a certain fixed (telephone or data) network connection should be established.

### DEFINITIONS

In this patent application certain terms are used, that require further explanation in order to be fully understood:

| | |
|---|---|
| Tariff Optimization | This is the determination of the optimal tariff, allowing for the highest possible profit for the provider, ensuring reasonable savings for the user in comparison to public standard tariffs (for the mobile phone connection of the user). |
| Table of tariffs | A table of tariffs is the relation between destinations and prices that is individually generated for the user. Tariffs are valid for a certain period of time (e.g. during the stay in a hotel) and can vary according to the time of the day. |
| Parameter | Important parameter to determine the individual table of tariffs are (among others) the clients mobile phone number, nationality, country of residence, expected user profile, etc.. Under consideration of these parameters it is possible to determine a confidence interval for the client's mobile phone tariff. |
| PBX | Private Branch Exchange is the term used for a local switchboard that enables internal communication and that is connected to the public switched telephone network (PSTN). |
| MNO | Mobile Network Operator is the owner of a mobile phone license, operating a mobile phone network. |
| MVNO | Mobile Virtual Network Operator (sometimes called MOLO) is the operator of a virtual mobile phone network, who uses the MNO's network for his own clients. |
| zMRDB | central Master Routing Database. This database provides the correlation between a mobile phone number and the corresponding mobile phone network. zMRDB was created in Germany after the introduction of the so called portability, that allows mobile phone users to maintain their phone number when changing from one MNO or MVNO to another. In the past, the phone number prefix directly identified the network and thus the MNO. |
| PathFinder | PathFinder is the mechanism equivalent to zMRDB. It is maintained by the GSM association and has a worldwide reach. Due to late updates, it is still reasonable to use zMRDB for ported numbers in Germany. |
| Provider | In this patent application "provider" stands for an organization that is reselling telecommunication services at the best possible rate. Typically it would be the owner of a PBX, which is connected to the fixed telephone or data network. |

### BACKGROUND OF THE INVENTION

FR 2 858 150 A1 and US 2007/037550 A1 disclose typical least cost routing devices which determine the cheapest route of a phone call from several possible routes.

Tourism is an ever growing business, which accounts for approximately 9% of the global Gross Domestic Product (GDP). During the year 2010 almost 1 billion of tourist arrivals were counted globally. Additionally the communication desire of travelers is higher than ever. Relatives are used to know from each other as often as possible, particularly when abroad.

Most hotels do not consider the travellers communication desire and, instead of offering the existing phone or data network at reasonable and transparent prices, rely on the few travellers in utter need of communication in order to get some extra revenue from phone calls or data connections. As a result, the existing communication infrastructure is mainly unused.

After the worldwide introduction of mobile phone telephony and particularly the GSM standard, every mobile phone subscriber can be reached in every country with a GSM network under his unique phone number and make phone calls camping on a foreign GSM network. This mechanism is known as "roaming". Due to the amount of MNOs at a global scale, billing is rather complicated and is getting even more complicated with the ever rising number of MVNOs. As a result, prices under roaming use to be very high.

Some MNOs or MVNOs have started to inform their clients about roaming prices by sending an SMS message every time the client books into a foreign network. Tariffs under roaming can be ten to fifty times higher than under normal conditions. This converts mobile communication abroad into pricy luxury.

Despite the extension of mobile phone networks, most countries (including the emerging economies) maintain large, high quality fixed networks, which allow for cheap call forwarding and termination or cheap data transmission. Nevertheless, this ability to terminate phone calls economically often remains unused. In some countries so called "call shops" make usage of the price difference between fixed and mobile networks. Prices in call shops are still rather high, since there are a lot of costs associated to the maintenance of all installations.

In strong contrast to this, existing phone infrastructures (particularly in hotels) remain underutilized, because of the non-transparent prices.

In the past many telephone systems have been provided which use and control a fixed (telephone or data) network connection (that means a landline or an IP based connection for telephony or data transmission). These systems already consider establishing connections over different fixed (telephone or data) network operators or even a certain mobile operator.

However, these systems do not consider all relevant available information. This concerns parameters which are relevant to the user and the provider of a PBX. In principal, the user wants a cheaper connection than he could have with his mobile phone often enough without actually knowing the real cost of using his mobile phone. The provider of the PBX (for example a hotel where the PBX is installed) wants to charge a maximal possible price. This price must of course be cheaper than the cheapest price the user can have with his mobile phone connection. The prior art PBXs do not consider that a user can also use his mobile phone when controlling the fixed (telephone or data) network connection. Therefore, the disadvantage of the prior art PBXs is that they can't control in a certain situation for a certain user if a fixed (telephone or data) network connection (landline or IP) should be established or not.

The technical objective is therefore to provide a system, a method and a computer program product for determining if a certain connection, i.e. a fixed (telephone or data) network connection (landline or IP) for a certain user to a certain destination at a certain time should be established or not.

### SUMMARY OF THE INVENTION

The invention relates to a telephone system according to claim 1, a method according to claim 10 and a computer program product according to claim 15.

The terms "comprise", "comprises" or "comprising" as used in the present specification and claims, for example in claim 1, have the meaning that the system of the invention may comprise that or those means mentioned in, for example, claim 1, or that further components, means etc. (more specifically defined below) may also be comprised by the system.

The terms "comprise" , "comprises" or "comprising" as used in the present specification and claims may, however, also include cases where the system of the invention mainly consists of that or those means mentioned, for example, in claim 1, optionally together with any necessary component or means a skilled person may include into such a system in order to achieve the object of the invention, or may even include cases where the system of the invention exclusively consists of that or those means mentioned, for example, in claim 1, optionally, but not necessarily, together with any necessary component, means etc. a skilled person may include into such a composition in order to achieve the object of the invention. Particularly in the latter case where the terms "comprise" , "comprises" or "comprising" as used in the present specification and claims may have the meaning of an "exclusively consisting of", subclaims of the present application may claim, and corresponding parts of the specification may describe, further preferred embodiments, which are characterized by additional specified features which, in combination with the features of the independent claim and corresponding parts of the description, are summarized to belong to the invention as described in its broadest scope claimed.

In other words: The terms "comprise" or "comprises" or "comprising" may have, in the present specification and claims, the meaning of describing a non-exhaustive enumeration of elements or, alternatively, may have, in the present specification and claims, the meaning of describing an exhaustive enumeration of elements, in the latter case without excluding further preferred embodiments being characterized by additional features.

The same applies mutatis mutandis to the terms "comprise", "comprises" or "comprising" in connection with the steps as described for example in claim 10.

According to the invention a telephone system is provided which determines if a certain fixed (telephone or data) network connection should be established. The telephone system comprises means for reading individual parameters, means for reading a price of a fixed (telephone or data) network connection, a network affiliation inquiry module, a tariff determination module, means for estimating an individual price, means for estimating an individual maximal price, means for comparing and means for outputting.

The means for reading individual parameters try to read in the mobile phone number and/or other parameters which can concern the mobile phone connection of a user.

The means for reading a price read in the price of a fixed (telephone or data) network connection whereto and when the user wants to make a telephone call or a data connection.

The network affiliation inquiry module can be connected to a network to gather information from a network affiliation database.

The tariff determination module can be connected to a tariff database to gather information from the tariff database.

The means for estimating an individual price use the data provided by the means for reading the individual parameters.

Furthermore, the means for estimating an individual price use the network affiliation inquiry module and/or the tariff determination module.

Depending on the individual parameters an individual price for a mobile phone connection to a certain destination at a certain time can be estimated.

Afterwards the means for estimating an individual maximal price read the individual price for the certain destination at the certain time provided by the means for estimating an individual price. The individual maximal price for the certain destination at the certain time is set to a value equal to, or less than, the individual price.

The means for comparing reads the individual maximal price for the certain destination at the certain time and also reads the price of the fixed (telephone or data) network connection to the certain destination at the certain time. Then, the value of the individual maximal price and the value of the price of the fixed (telephone or data) network connection are compared.

Finally, the means for outputting the result of the comparison outputs the result of the comparison provided by the means for comparing.

A data network connection is any connection where any data is transferred. This includes, for example, a data connection related to the use of the internet or to the use of the Short Message Service (SMS) or the Multimedia Messaging Service (MMS).

The means for outputting the result of the comparison can be connected to a common PBX for establishing a fixed (telephone or data) network connection. A connection will be established depending on the result of the comparison provided by the means for comparing. Furthermore, optionally, the means for outputting the result of the comparison can comprise a display for displaying the result of the comparison or a printing device for printing the result of the comparison.

The individual price can be estimated by using the mobile phone number. In some cases a more accurate estimation of the individual price is possible if also other (i.e. additional) parameters are used. For example, the tariff name can be such an additional parameter. From the mobile phone number only the home network (and in occasions the MVNO) of a user can be determined. The tariff name allows determining which special tariff is valid for the user. With this information a more accurate price can be estimated for the certain destination at the certain time.

If the mobile phone number is not available other parameters can be used alone to estimate a tariff for the mobile phone connection. Such parameters can be the home network identification (home network ID), the tariff name, the country of residence, the nationality, the room category, the category of the hotel itself and further parameters suitable to distinguish people (e.g. business or tourist client).

The means for estimating an individual price is capable of assigning a table of tariffs to the individual set of parameters (or to a single individual parameter) that is provided by the means for parameter reading. Then, it is possible to retrieve an individual price to the certain destination at the certain time from the table of tariffs.

Furthermore, the means for estimating an individual price can be connected to a network affiliation inquiry module and a tariff determination module. The tariff determination module is connected to a tariff database which contains information for assigning tariff information to a certain home network identification and/or other parameters. For example, the certain home network identification and the tariff name allows for assigning to a concrete tariff. The network affiliation inquiry module can be connected to a network affiliation database for assigning a certain home network identification to the mobile phone number and/or other parameters to read in the certain home network identification.

Alternatively, the telephone system comprises the tariff database. The tariff database can be created by online screening. That means a computer program scans the webpages of the MNOs and MVNOs with respect to their tariff data and saves this tariff data in the local tariff database.

Optionally, the means for estimating an individual maximal price is capable of learning from previous situations. Anyway, the individual maximal price is equal to, or less than, the individual price. However, businessmen are probably less interested in the price compared to tourists because the company often pays the telephone calls or data connections of the businessmen. Therefore, the telephone system of the present invention can optionally comprise a feedback system that compares the estimated usage of the telephone system with the client's real usage of the telephone system. That means the telephone system tracks if and how often people use the fixed (telephone or data) network connection and also stores the additional parameters like, for example, if a businessman or not a businessman used the fixed (telephone or data) network connection. The means for estimating the individual maximal price can then automatically increase or decrease the value of the individual maximal price.

The invention has several advantages. It allows the usage of underutilized infrastructure (e.g. PBXs in hotels) transparently for the user. Both PBX operator and user benefit from the system, because the user avoids high tariffs under roaming and the PBX operator receives additional revenue using his existing infrastructure. The system selects a tariff (i.e. establishes a connection with a tariff) that is low enough for the user to save money, but still allows the provider to make good profit.

Furthermore, the voice quality of a fixed network connection is often better than the voice quality of a mobile phone connection, because mobile phone communication always uses voice compression, so that using a fixed network connection improves the quality of the communication.

A further advantage of the system is that there is no need for an extra billing process, because the end-user already has a billing relation with the provider (for example during the stay in a hotel).

### BRIEF DESCRIPTION OF THE DRAWINGS

Fig. 1 shows a telephone system 1 for determining if a certain fixed (telephone or data) network connection (landline or IP connection) should be established, and
Fig. 2 shows a flow chart of a procedure using the system 1 of Fig. 1 where it is determined if a certain telephone or data connection should be established or not.

### DETAILED DESCRIPTION OF THE PREFERRED EMBODIMENT

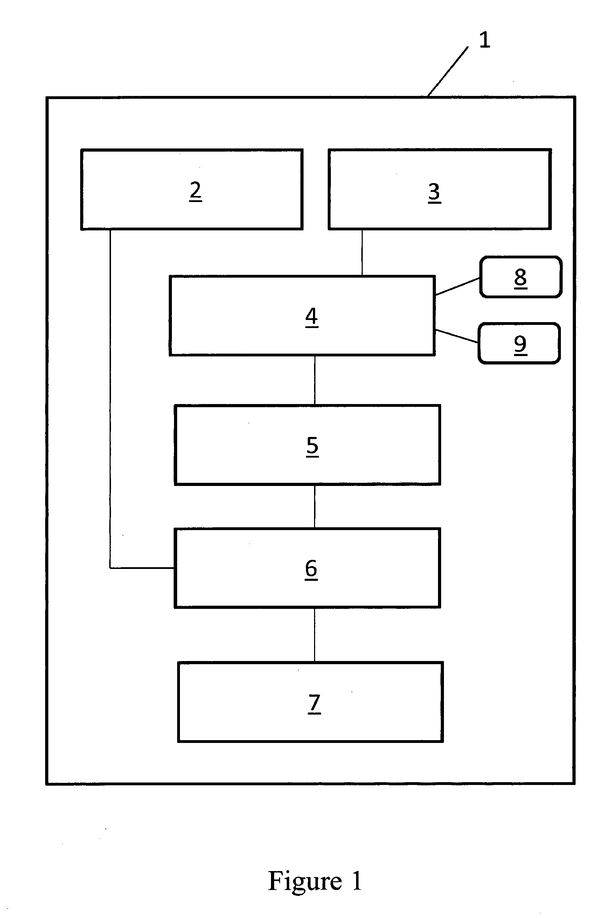

The telephone system 1 shown in Fig. 1 can be used to determine if a certain fixed (telephone or data) network connection to a certain destination at a certain time should be established (from the point of view of the provider of a PBX). A fixed (telephone or data) network connection is a connection based on a landline telephone connection or a connection based on the Internet Protocol (IP) (e.g. Voice over IP (VoIP)). A user always wants to use the cheapest telephone or data connection which is available. In today's life people always have a mobile phone at hand. If a user having a mobile phone should consider the fixed (telephone or data) network connection for his call or data transfer (for example internet, SMS, MMS, etc.) this connection must be cheaper than the mobile phone connection.

However, the provider of a telephone system 1 always wants to charge the maximal possible price. The Tariff Optimization is important for the provider. Therefore, the telephone system 1 can estimate the maximal possible price a user normally accepts for using the fixed (telephone or data) network connection instead of his mobile phone connection. Furthermore, the telephone system 1 can output the comparison of the maximal possible price the user normally accepts and the price for the fixed (telephone or data) network connection. Depending on this result it can be determined if a fixed (telephone or data) network connection should be established. The telephone system 1 uses individual parameters of the mobile phone connection of a user to be able to control if a fixed (telephone or data) network connection should be established (from the point of view of the provider).

The telephone system 1 of Fig. 1 comprises means 3 for reading individual parameters, means 2 for reading a price, a network affiliation inquiry module, a tariff determination module, means 4 for estimating an individual price, means 5 for estimating an individual maximal price, means 6 for comparing and means 7 for outputting.

The means 3 for reading individual parameters read in parameters which are associated with the mobile phone connection of a user. First, the means 3 for reading individual parameters try to read in the mobile phone number of the user. Then, if the means 3 for reading individual parameters succeed in reading the mobile phone number, additional parameters which could be used additionally to the mobile phone number can be read in. In the other case, if the means 3 for reading individual parameters do not succeed in reading the mobile phone number of the user, it is mandatory to read in additional parameters.

For reading the individual parameters a keyboard can be used. It is also possible to use radiocommunication to read in the individual parameters. The means 3 can also be connected to another system (for example a payment system) where the individual parameters are already stored to read in these parameters.

The means 2 for reading a price can read a price of a fixed (telephone or data) network connection. A user always wants to make a phone call or a data connection to a certain destination at a certain time. Therefore, the means 2 for reading a price can read in price information for the fixed (telephone or data) network connection to several destinations at several times which include the price to the certain destination at the certain time the user wants to make his phone call or data connection. The means 2 for reading a price can then provide the price for a call or a data connection to the certain destination at the certain time. In the case of the data connection it can be a price for a certain data volume.

Alternatively, the means 2 for reading a price can read in a price of a connection to the certain destination at the certain time directly from a price structure (for example provided by a database), comprising the prices to several destinations at several times. In a further alternative the means 2 for reading a price does not always read in a new price for the fixed (telephone or data) network connection, but always (or for a certain time) provides a preset price. To sum up, the means 2 for reading in a price can provide a price of a fixed (telephone or data) network connection to a certain destination at a certain time or a preset price.

The network affiliation inquiry module 9 can be connected to a network affiliation database, for example zMRDB or PathFinder. The network affiliation inquiry module 9 gets one or more parameter from the means 4 for estimating an individual price such as the mobile phone number of a user. The network affiliation inquiry module 9 uses its network connection to the network affiliation database to assign a certain home network identification to the before read parameters wherein the home network ID is the ID of the network of the MNO or MVNO the user has a contract with. The network affiliation inquiry module 9 then submits the home network ID to the means 4 for estimating an individual price.

The tariff determination module 8 can be connected to a tariff database. The tariff determination module 8 gets the certain home network ID and/or other parameters from the means 4 for estimating an individual price. The tariff determination module 8 uses its network connection to the tariff database to assign tariff information to the parameter(s) earlier read in. The tariff determination module 8 then submits the tariff information to the means 4 for estimating an individual price.

The means 4 for estimating an individual price reads the individual parameters provided by means 3 for reading individual parameters. These parameters are submitted to the network affiliation inquiry module 9 and/or the tariff determination module 8.

For example, means 4 for estimating an individual price submits the mobile phone number to the network affiliation inquiry module 9. Then, means 4 for estimating an individual price receives the certain home network identification corresponding to the mobile phone number from the network affiliation inquiry module 9. Afterwards, means 4 for estimating an individual price submits the certain home network ID to the tariff determination module 8. Then, means 4 for estimating an individual price receives the tariff information corresponding to the certain home network ID from the tariff determination module 8. Afterwards, means 4 creates a table of tariffs from the received tariff information.

Alternatively, if the means 4 for estimating an individual price receives one (or more) appropriate parameter(s) directly from the means 3 for reading individual parameters this parameter (or these parameters) could be directly submitted to the tariff determination module 8 for receiving tariff information. For example, the means 4 for estimating an individual price receives the home network identification from the means 3 for reading individual parameters. In this case it is not necessary to use the network affiliation inquiry module 9.

It is also possible that the means 4 for estimating an individual price submits two (or more) parameters to the network affiliation inquiry module 9 and/or the tariff determination module 8. For example, the home network ID as well as the tariff name could be submitted to the tariff determination module 8. This allows for a better determination of the real tariff because one MNO or MVNO normally provides more than one tariff and the tariff name allows determining which tariff is the valid tariff for the user.

The individual parameters are used to estimate the price for a mobile phone connection to the certain destination to which, and/or at the certain time when, the user wants to make a telephone call or data connection. The individual parameters are parameters such as mobile phone number, home network ID, tariff name, residence of the user, nationality of the user, room type in a hotel a user has selected and other parameters, which could distinguish people with respect to their mobile phone connection. For example, the difference between a business client or a tourist is a parameter which may have an influence on their mobile phone connection.

Therefore, by using the tariff determination module 8, the means 4 for estimating an individual price assigns a table of tariffs to the individual parameters. From the table of tariffs an individual price for a mobile phone connection to the certain destination to which, and/or at the certain time when, the user wants to make a telephone call or data connection can be estimated. For example, if the table of tariffs provides an interval for the price to the certain location at the certain time, the average of the interval could be set as individual price. Of course, it is also possible to set any other value of such an interval as the individual price. In the case that means 4 estimate an individual price for a data connection of a mobile phone this price may depend on the data volume or the connection time or both.

The means 5 for estimating an individual maximal price can estimate an individual maximal price from the individual price for a mobile phone connection to a certain destination at a certain time. The individual maximal price is the price the user is probably willing to pay for the fixed (telephone or data) network connection. This price must be equal to, or less than, the individual price the user has to pay to a certain destination at a certain time with his mobile phone. Otherwise the user would of course use his mobile phone unless he prefers the landline telephone because of the enhanced voice quality or the missing exposure to microwaves from the mobile phone.

The means 5 for estimating an individual maximal price receives the individual price from the means 4 for estimating an individual price. Then, the means 5 for estimating an individual maximal price subtracts a constant value (for example 0.1 €) which is equal or more than zero from the individual price to estimate the individual maximal price. Of course any other suitable algorithm to determine the individual maximal price from the individual price can also be used, as far as the individual maximal price is equal to, or less than, the individual price.

The means 6 receive the individual maximal price from means 5 for estimating the individual maximal price and the price of the fixed (telephone or data) network connection from means 2 for reading a price. Then, means 6 compares the individual maximal price to the certain destination to which, and/or at the certain time when, the user wants to make a telephone call or data connection with the price of the fixed (telephone or data) network connection. The result of the comparison is the individual maximal price minus the price of the fixed (telephone or data) network connection. The result of the comparison is provided to the means 7 for outputting the result of the comparison. If the result of the comparison is greater than or equal to cero, a fixed (telephone or data) network connection should be established to generate savings or higher comfort.

The means 7 receive the result of the comparison. The result of the comparison can be used to control if a fixed (telephone or data) network connection should be established from the point of view of the provider by submitting the result to a PBX for establishing a connection.

Furthermore, the result can be submitted to a display or a printing device to show the calculated value. Printing or displaying the result can be realized either individually for every connection or in a centralized manner. In a centralized manner means that the results for different certain destinations and/or different certain times are first stored and then printed or displayed in a kind of a table.

The individual maximal price can also be shown in a display. A system comprising the telephone system 1 and a PBX can be provided in a way that when the user inputs the telephone number of the person (i.e. the destination) he wants to call, the system shows the individual maximal price for him. Since the user does this at a certain time the system automatically knows the time the user wants to make the call. The system 1 can comprise means which are capable of processing the user's decision upon the route of the connection. That means if the user accepts the price (for example by pressing a certain button) and means 7 output the result that the connection should be established then the system establishes the connection.

Furthermore, the system can show the price difference of the individual maximal price and the individual price to the client of the system. That means the client can estimate how much he will save when using the fixed (telephone or data) network connection instead of using his mobile phone.

The system 1 can also comprise the tariff database. Such a tariff database can be provided by online screening of the relevant webpages. A special program running on a computer connects to the internet and scans the webpages of the MNOs and MVNOs with respect to their tariff content. The retrieved tariff information is stored in the tariff database.

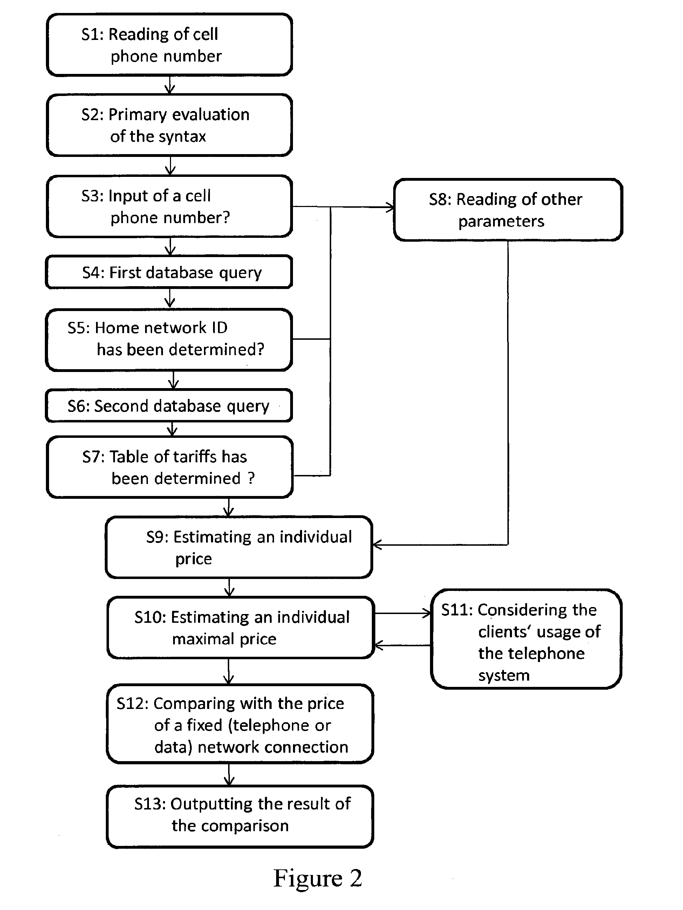

Figure 2 shows a flowchart of an example of a process for determining if a certain fixed (telephone or data) network connection should be established. Such a process can be realized with a system 1 described in Fig. 1.

In step S1 of Fig. 2 the means 3 for reading individual parameters try to read the mobile phone number.

In step S2 the means 3 for reading individual parameters perform a primary evaluation of the syntax. If no mobile phone number has been read the process directly continues with step S3. If a mobile phone number has been read the process also continues with step S3. If a sequence of numbers has been read which can't be a mobile phone number (for example two digits can not represent a mobile phone number) then the process goes back to step S1.

In step S3 the means 3 for reading individual parameters decide if the input of a mobile phone number has occurred. If a mobile phone number was inputted the process continues with step S4. If no mobile phone number was inputted the process continues with step S8.

In step S4 the means 4 for estimating an individual price receive the mobile phone number from means 3 for reading individual parameters and submit the mobile phone number to the network affiliation inquiry module 9. The network affiliation inquiry module 9 connects to the network affiliation database and tries to assign a home network ID to the mobile phone number.

In step S5 the means 4 for estimating an individual price decide if the home network ID has been received from the network affiliation inquiry module 9. If means 4 have received the home network ID the process continues with step S6. If means 4 do not have received the home network ID the process continues with step S8.

In step S6 the means 4 for estimating an individual price submit the home network ID to the tariff determination module 8. The tariff determination module 8 connects to the tariff database and tries to assign tariff information to the home network ID.

In step S7 the means 4 for estimating an individual price decide if the tariff information has been received from the tariff determination module 8. If means 4 have received any tariff information, means 4 create a table of tariffs and the process continues with step S9. If means 4 do not have received any tariff information the process continues with step S8.

In step S8 the means 3 for reading individual parameters try to read a different parameter than the mobile phone number and submit this parameter to means 4. The means 4 for estimating an individual price assign a table of tariffs to the parameter by using the network affiliation inquiry module 9 and/or the tariff determination module 8.

In step S9 means 4 for estimating an individual price estimate an individual price to the certain destination and the certain time whereto and when the user wants to make his phone call or data connection from the table of tariffs. If the table of tariffs provides a defined price for the connection to the certain destination at the certain time then this price is the individual price. The table of tariffs can also provide an interval for the price to the certain destination at the certain time in the case that the tariff information is not definite. Then, an algorithm selects a price in this price interval. The selected price is then the individual price.

In step S10 the means 5 for estimating the individual maximal price receive the individual price from means 4 for estimating the individual price. An algorithm calculates the individual maximal price from the individual price on condition that the individual maximal price is equal to, or less than, the individual price.

In an optional step S1 the clients' real usage of the telephone system 1 is compared to the clients' estimated use of the telephone system 1. The means 5 for estimating the individual maximal price then automatically increases or decreases the value of the individual maximal price if it seems that a reduction of the price would support additional use of the system.

In step S12 means 6 for comparing receive the price of the fixed (telephone or data) network connection from means 2 and the estimated individual maximal price from means 5. The means 6 compare the estimated individual maximal price to the certain destination at the certain time with the price of the fixed (telephone or data) network connection to the certain destination at the certain time and submit the result of the comparison to the means 7.

In step S13 means 7 for outputting receive the result of the comparison from means 6 and output the result of the comparison.

The above described process is only one possible example of such a process. It is also possible that two parameters are used in the first and second database query to improve the query results. This can concern the network affiliation inquiry module 9 as well as the tariff determination module 8. It is also possible that only the database query to the tariff database is performed because the home network ID is already known.

The telephone system 1 can be used together with a PBX which really establishes the fixed (telephone or data) network connection. In this case the telephone system 1 is connected to the PBX and the means 7 for outputting the result of the comparison submit output signals which represent the result of the comparison to the PBX. Of course, the telephone system 1 can be integrated into a specially designed PBX. The telephone system 1 can also be formed of one or several cloud applications, e.g. as part of a cloud PBX IP solution.

It is also possible to use a common computer (or embedded system) to realize a method according to the present invention. In this case a computer program product is directly loadable into the internal memory of the computer, comprises software code portions for performing the steps of the method according to the present invention and runs on the computer. However, such a computer must comprise the necessary input and output elements as well as the necessary network connections to at least one database. For example, the database connections can be established over the internet.

A computer program product is a computer program which is stored on any physical medium (e.g. computer, CD, DVD, RAM, ROM, flash drive, or any other device) or in the cloud.

The invention as defined by the claims was explained above by in detail referring to the preferred embodiments thereof. The invention as defined by the claims, however, is not restricted to the embodiments shown in the Figures or described in the description, particularly not to those embodiments described as preferred embodiments. The embodiments shown in the Figures and/or described in the description as preferred embodiments serve to allow a better and/or more comprehensive understanding of the invention as defined by the claims.

The invention is defined by the claims. This may involve combinations of two or more features of different embodiments.

## Claims

1. A telephone system (1) determining if a certain fixed telephone or fixed data network connection should be established, comprising:
a) means (3) for reading individual parameters capable of reading a mobile phone number,
b) means (2) for reading a price capable of reading a price of a fixed telephone or fixed data network connection,
c) a network affiliation inquiry module (9) for gathering information of a mobile network from a mobile network affiliation database,
d) a tariff determination module (8) for gathering information of a mobile network from a tariff database,
e) means (4) for estimating an individual price for a mobile phone connection capable of assigning a table of tariffs to the individual parameter(s) provided by the means (3) for reading the individual parameters by using the network affiliation inquiry module (9) and/or the tariff determination module (8) and capable of estimating an individual price for a mobile phone connection from the table of tariffs to a certain destination at a certain time,
f) means (5) for estimating an individual maximal price capable of estimating an individual maximal price to the certain destination at the certain time from the individual price for a mobile phone connection provided by the means (4) for estimating an individual price,
wherein the individual maximal price is the price a user is probably willing to pay for the fixed telephone or fixed data network connection, and
wherein the estimated individual maximal price is less than the estimated individual price to the certain destination at the certain time,
g) means (6) for comparing the estimated individual maximal price to the certain destination at the certain time with the price of the fixed telephone or fixed data network connection to the certain destination at the certain time, and
h) means (7) for outputting the result of the comparison.

2. The telephone system (1) according to claim 1, wherein means (3) for reading individual parameters is capable of reading other parameters which can comprise a parameter selected from the group consisting of home network identification, tariff name, country of residence, nationality, room category, category of a hotel itself and parameters suitable to distinguish people.

3. The telephone system (1) according to claim 1 or 2, wherein the tariff determination module (8) assigns tariff information to a certain home network identification and/or other parameters to read in the tariff information.

4. The telephone system (1) according to claim 1, 2 or 3, wherein the network affiliation inquiry module (9) assigns a certain home network identification to the mobile phone number and/or other parameters to read in the certain home network identification.

5. The telephone system (1) according to any of claims 1 to 4, further comprising the tariff database which has been created by online screening or through any other kind of information retrieval.

6. The telephone system (1) according to any of claims 1 to 5, wherein the means (7) for outputting the result of the comparison comprise a connection to a private branch exchange (PBX).

7. The telephone system (1) according to any of claims 1 to 6, wherein the means for outputting the result of the comparison comprise a display or a printing device.

8. The telephone system (1) according to any of claims 1 to 7, further comprising means capable of processing the user's decision upon the route of the phone call.

9. The telephone system (1) according to any of claims 1 to 8, wherein the means (5) for estimating an individual maximal price use a feedback mechanism that compares the estimated usage of the telephone system (1) with the former real usage of the telephone system (1) of similar clients to adapt the difference of the individual maximal price and the individual price.

10. A method for determining if a certain fixed telephone or fixed data network connection should be established using a telephone system (1) according to any of claims 1 to 9, comprising the steps:
a) reading a mobile phone number and/or other parameters,
b) reading a price of a fixed telephone or fixed data network connection,
c) assigning a table of tariffs to the mobile phone number and/or the other parameters by at least one database request,
d) estimating an individual price for a mobile phone connection from the table of tariffs to a certain destination at a certain time,
e) estimating an individual maximal price to the certain destination at the certain time based on the individual price for a mobile phone connection, wherein the estimated individual maximal price is less than the estimated individual price to the certain destination at the certain time,
f) comparing the estimated individual maximal price for the certain destination at the certain time with a price of the fixed telephone or fixed data network connection to the certain destination at the certain time, and
g) outputting the result of the comparison.

11. The method according to claim 10, wherein the other parameters can comprise a parameter selected from the group consisting of home network identification, tariff name, country of residence, nationality, room category, category of the hotel itself and parameters suitable to distinguish clients.

12. The method according to claim 10 or 11, further including the step assigning tariff information to the home network identification and/or other parameters to read in the tariff information and/or the step assigning a certain home network identification to the mobile phone number and/or other parameters to read in the certain home network identification.

13. The method according to any of claims 10 to 12, further including the step establishing a fixed telephone or fixed data network connection based on the result of the comparison.

14. The method according to any of claims 10 to 13, further including the step showing the result of the comparison on a display or a means for printing.

15. A computer program product directly loadable into the internal memory of a digital computer capable of being a telephone system for a fixed telephone or fixed data network connection, comprising software code portions for performing the steps of any of claims 10 to 14 when said product is run on a computer or similar means for data processing.

## Patentansprüche

1. Telefonsystem (1), welches bestimmt, ob eine bestimmte Fest-Telefon- oder eine Fest-Daten-Netzwerk-Verbindung hergestellt werden soll, umfassend:
(a) Mittel (3) zum Lesen individueller Parameter, die in der Lage sind, eine Mobiltelefon-Nummer zu lesen;
(b) Mittel (2) zum Lesen eines Preises, die in der Lage sind, einen Preis einer Fest-Telefon- oder einer Fest-Daten-Netzwerk-Verbindung zu lesen;
(c) ein Netzwerk-Anschluß-Abfrage-Modul (9) zum Erfassen von Informationen eines mobiles Netzwerks von einer mobilen Netzwerk-Anschluß-Datenbank;
(d) ein Modul (8) zur Bestimmung eines Tarifs zum Erfassen von Informationen eines mobilen Netzwerks von einer Tarif-Datenbank;
(e) Mittel (4) zum Abschätzen eines individuellen Preises für eine Mobiltelefon-Verbindung, die in der Lage sind, eine Tabelle von Tarifen dem/den individuellen Parameter(n) zuzuordnen, die durch die Mittel (3) zum Lesen der individuellen Parameter bereitgestellt werden, unter Verwendung des Netzwerk-Anschluß-Abfrage-Moduls (9) und/oder des Moduls (8) zur Bestimmung des Tarifs, und die in der Lage sind, einen individuellen Preis für eine Mobiltelefon-Verbindung aus der Tabelle von Tarifen zu einem bestimmten Zielort zu einer bestimmten Zeit abzuschätzen;
(f) Mittel zum Abschätzen eines individuellen Höchstpreises, die in der Lage sind, einen individuellen Höchstpreis zu dem bestimmten Zielort zu der bestimmten Zeit aus dem individuellen Preis für eine Mobiltelefon-Verbindung abzuschätzen, der durch die Mittel (4) zum Bestimmen eines individuellen Preises bereitgestellt wird,
worin der individuelle Höchstpreis der Preis ist, den ein Anwender wahrscheinlich bereit ist zu zahlen für die Fest-Telefon- oder die Fest-Daten-Netzwerk-Verbindung, und
worin der abgeschätzte individuelle Höchstpreis niedriger ist als der abgeschätzte individuelle Preis zu dem bestimmten Zielort zu der bestimmten Zeit;
(g) Mittel (6) zum Vergleichen des abgeschätzten individuellen Höchstpreises zu dem Zielort zu der bestimmten Zeit mit dem Preis der Fest-Telefon- oder der Fest-Daten-Netzwerk-Verbindung zu dem bestimmten Zielort zu der bestimmten Zeit; und
(h) Mittel (7) zum Ausgeben des Ergebnisses des Vergleichs.

2. Telefonsystem (1) nach Anspruch 1, worin die Mittel (3) zum Lesen der individuellen Parameter in der Lage sind, andere Parameter zu lesen, die einen Parameter umfassen können, der ausgewählt ist aus der Gruppe, die besteht aus Heim-Netzwerk-Identifikation, Tarif-Name, Aufenthaltsland, Nationalität, Zimmerkategorie, Kategorie eines Hotels als solchen und Parameter, die geeignet sind, Personen zu unterscheiden.

3. Telefonsystem (1) nach Anspruch 1 oder 2, worin das Modul (8) zur Bestimmung eines Tarifs eine Tarif-Information einer bestimmten Heim-Netzwerk-Identifikation und/oder anderen Parametern, die in der Tarif-Information zu lesen sind, zuordnet.

4. Telefonsystem (1) nach Anspruch 1, 2 oder 3, worin das Netzwerk-Anschluß-Abfrage-Modul (9) eine bestimmte Heim-Netzwerk-Identifikation der mobilen Telefon-Nummer und/oder anderen Parametern, die in der bestimmten Heim-Netzwerk-Identifikation zu lesen sind, zuordnet.

5. Telefonsystem (1) nach einem der Ansprüche 1 bis 4, darüber hinaus umfassend die Tarif-Datenbank, die durch Online-Screening oder durch irgendeine andere Art von Informationsgewinnung erstellt wurde.

6. Telefonsystem (1) nach einem der Ansprüche 1 bis 5, worin die Mittel (7) zum Ausgeben des Ergebnisses des Vergleichs eine Verbindung zu einer privaten Nebenstellenanlage (private branch exchange; PBX) umfassen.

7. Telefonsystem (1) nach einem der Ansprüche 1 bis 6, worin die Mittel zum Ausgeben des Ergebnisses des Vergleichs ein Display oder eine Druckvorrichtung umfassen.

8. Telefonsystem (1) nach einem der Ansprüche 1 bis 7, welches darüber hinaus Mittel umfasst, die in der Lage sind, die Entscheidung des Anwenders über die Leitung des Telefonanrufs zu verarbeiten.

9. Telefonsystem (1) nach einem der Ansprüche 1 bis 8, worin die Mittel (5) zum Abschätzen eines individuellen Höchstpreises einen Rückmeldungs-Mechanismus verwenden, der die abgeschätzte Verwendung des Telefonsystems (1) mit der früheren realen Verwendung des Telefonsystems (1) von ähnlichen Kunden vergleicht, um die Differenz des individuellen Höchstpreises und des individuellen Preises anzupassen.

10. Verfahren zur Bestimmung, ob eine bestimmte Fest-Telefon- oder eine Fest-Daten-Netzwerk-Verbindung hergestellt werden soll, unter Verwendung eines Telefonsystems (1) nach einem der Ansprüche 1 bis 9, welches die Schritte umfasst:
(a) Lesen einer Mobiltelefon-Nummer und/oder anderer Parameter;
(b) Lesen eines Preises einer Fest-Telefon- oder einer Fest-Daten-Netzwerk-Verbindung;
(c) Zuordnen einer Tabelle von Tarifen zu der Mobiltelefon-Nummer und/oder den anderen Parametern durch wenigstens eine Datenbank-Abfrage;
(d) Abschätzen eines individuellen Preises für eine Mobiltelefon-Verbindung aus der Tabelle von Tarifen zu einem bestimmten Zielort zu einer bestimmten Zeit;
(e) Abschätzen eines individuellen Höchstpreises zu dem bestimmten Zielort zu der bestimmten Zeit, bezogen auf den individuellen Preis für eine Mobiltelefon-Verbindung, worin der abgeschätzte individuelle Höchstpreis niedriger ist als der abgeschätzte individuelle Preis zu dem bestimmten Zielort zu der bestimmten Zeit;
(f) Vergleichen des abgeschätzten individuellen Höchstpreises zu dem bestimmten Zielort zu der bestimmten Zeit mit einem Preis der Fest-Telefon- oder der Fest-Daten-Netzwerk-Verbindung zu dem bestimmten Zielort zu der bestimmten Zeit; und
(g) Ausgeben des Ergebnisses des Vergleichs.

11. Verfahren nach Anspruch 10, worin die anderen Parameter einen Parameter umfassen können, der ausgewählt ist aus der Gruppe, die besteht aus Heim-Netzwerk-Identifikation, Tarif-Name, Aufenthaltsland, Nationalität, Zimmerkategorie, Kategorie des Hotels als solchen und Parameter, die geeignet sind, Kunden zu unterscheiden.

12. Verfahren nach Anspruch 10 oder 11, welches darüber hinaus den Schritt einschließt, daß man die Tarif-Information der Heim-Netzwerk-Identifikation und/oder andere Parameter, die in der Tarif-Information zu lesen sind, zuordnet, und/oder den Schritt einschließt, daß man eine bestimmte Heim-Netzwerk-Identifikation der Mobiltelefon-Nummer und/oder anderen Parametern, die in der bestimmten Heim-Netzwerk-Identifikation zu lesen sind, zuordnet.

13. Verfahren nach einem der Ansprüche 10 bis 12, welches darüber hinaus den Schritt einschließt, daß man eine Fest-Telefon- oder Fest-Daten-Netzwerk-Verbindung herstellt, basierend auf dem Ergebnis des Vergleichs.

14. Verfahren nach einem der Ansprüche 10 bis 13, welches darüber hinaus den Schritt einschließt, daß man das Ergebnis des Vergleichs auf einem Display oder einer Einrichtung zum Drucken anzeigt.

15. Computerprogramm-Produkt, das in den internen Speicher eines digitalen Computers direkt ladbar ist, welcher in der Lage ist, ein Telefonsystem für eine Fest-Telefon- oder eine Fest-Daten-Netzwerk-Verbindung zu sein, das Software-Code-Teile zum Durchführen der Schritte nach einem der Ansprüche 10 bis 14 umfaßt, wenn man das Produkt auf einem Computer oder einer ähnlichen Einrichtung zur Datenverarbeitung laufen läßt.

## Revendications

1. Un système téléphonique (1) déterminant si une certaine connexion de téléphone fixe ou de réseau fixe de données devrait être établi, comprenant:
(a) des moyens (3) pour lire les paramètres individuels capables de lire un numéro de téléphone portable,
(b) des moyens (2) de lecture de prix capable de lire un prix d'un téléphone fixe ou des données fixes d'une connexion de réseau,
(c) un module d'enquête del' affilation réseau (9) de collecte d'informations d'un réseau portable à partir d'une base de données d'affiliation à un réseau portable
(d) un module de détermination de tarif (8) pour la collecte d'informations d'un réseau portable à partir d'une base de données tarifaires
(e) des moyens (4) pour estimer un prix individuel d'une connexion de téléphone portable capable d'assigner un tableau des tarifs des paramètres individuels fournis par les moyens (3) de lecture des paramètres individuels en utilisant le module d'enquête de réseau d'affiliation (9) et/ou le module de détermination des tarifs (8) et capable d'estimer un prix individuel pour une connexion de téléphone portable de la table des tarifs pour une certaine destination à une certaine heure.
(f) des moyens (5) pour estimer un prix maximum individuel capable d'estimer un prix maximum individuel á une certaine destination au moment donné du prix individuel pour une connexion de téléphone portable fourni par les moyens (4) d'estimation d'un prix individuel,
dans laquelle le prix maximum individuel est le prix qu'un utilisateur est probablement prêt à payer pour le téléphone fixe ou d'une connexion fixe de réseau de données, et
dans lequel le prix maximum individuel estimé est inferieur au prix individuel estimé pour la destination donnée au moment donné,
(g) des moyens (6) pour comparer le prix individuel maximum estimé à la destination donnée au moment donné dans le prix de la téléphonie fixe ou d'une connexion fixe de réseau de données à la destination donnée au moment donné, et
(h) des moyens pour délivrer en sortie le résultat de la comparaison.

2. Le système téléphonique (1) selon la reindivicación 1, dans lequel les moyens (3) pour les paramètres individuels sont capables de lire d'autres paramètres qui comprennent un paramètre sélectionné dans le groupe constitué par les identifications de réseau domestique, nom tarifaire, pays de résidence, nationalité, catégorie de chambre, de la catégorie d'un hôtel lui-même et les paramètres permettant de différencier les gens.

3. Le système téléphonique (1) selon les reindivicacións 1 ou 2, dans lequel le module (8) de détermination de tarif d'information tarifaire affecte dans une certaine indentification de réseau domestique et / ou d'autres paramètres à lire dans les informations de tarif.

4. Le système téléphonique (1) selon les reindivicacións 1, 2 ou 3, dans lequel le module (9) de demande d'affiliation de réseau attribue un certain identification de réseau domestique au numero de téléphone portable et / ou d'autres paramètres de lecture dans l'identification déterminé de réseau domestique.

5. Le système téléphonique (1) selon l'une quelconque des reindivicacións 1 à 4, comprenant en outre la base de données tarifaire qui a été créée par projection en ligne ou bien tout autre type de recherche d'information.

6. Le système téléphonique (1) selon l'une quelconque des reindivicacións 1 à 5, dans lequel les moyens (7) destinés à fournir en sortie le résultat d'une comparaison comprennent une connexion à un autocommutateur privé (PBX).

7. Le système téléphonique (1) selon l'une quelconque des conditions 1 à 6, dans lequel les moyens destinés à fournir en sortie le résultat d'une comparaison comprennent un dispositif d'affichage ou un dispositif d'impression.

8. Le système téléphonique (1) selon l'une quelconque des reindivicacións 1 à 7, comprenant en outre la décision signifie capable de traiter les décisions de l'utilisateur de la voie de l'appel de téléphone.

9. Le système téléphonique (1) selon l'une quelconque des reindivicacións 1 à 8, dans lequel les moyens (5) destinés à environ un prix particulier utilisent un mécanisme de rétroaction qui compare l'utilisation estimée de l'installation téléphonique (1) dont l'ancien usage réel du système de téléphone (1) des clients semblables à adapter la différence de le prix maximal individuelle le prix individuel.

10. Un procédé pour déterminer si un certain téléphone fixe ou connexion fixe au réseau de données doivent être établis en utilisant un système téléphonique (1) selon l'une quelconque des conditions 1 à 9, comprenant les étapes consistant à:
(a) la lecture d'un numéro de téléphone portable et / ou d'autres paramètres;
(b) la lecture d'un prix d'un téléphone fixe ou des données fixes d'une connexion de réseau:
(c) affectation d'un tableau des tarifs pour le numéro de téléphone mobile et aux autres paramètres par au moins une requête de base de données;
(d) l'estimation d'un prix individuel pour une connexion de téléphone portable à partir de la table des tarifs à une certaine destination à un certain moment;
(e) l'estimation d'un prix maximum individuel á une certaine destination á un moment donné sur la base du prix individuel pour une connexion de téléphone portable, dans lequel le prix maximum individuel est estimé à moins que le prix individuel estimé à la destination donnée pour un certain temps;
(f) comparant le prix maximum individuel estimé à la destination donnée pour un certain temps avec un prix du téléphone fixe ou connexion fixe de réseau de données à la destination donnée á un temps donné; et
(g) fournir en sortie le résultat de la comparaison.

11. Le procédé selon la reindivicación 10, dans lequel les autres paramètres peuvent comprendre un paramètre sélectionné dans le groupe constitué d'identification de réseau domestique, tarifaire, nom, pays de résidence, de nationalité, catégorie de chambre, la catégorie de l'hôtel lui-même et les paramètres appropriés pour distinguer les clients.

12. Le procédé selon les reindivicacións 10 ou 11, inclue en outre l'étape d'attribution des informations tarifaires à l'identification et / ou d'autres paramètres pour lire dans le renseignement tarifaire et / ou l'étape d'affectation d'une certaine identification de réseau domestique pour le numéro de téléphone mobile et / ou d'autres paramètres à lire dans l'identification certaine de réseau domestique.

13. Le procédé selon les reindivicacións 10 à 12, comprenant en outre l'étape d'établissement d'une connexion de téléphone fixe ou d'une connexion de réseau basée sur le résultat de la comparaison.

14. Le procédé selon les conditions 10 à 13, comprenant en outre l'étape consistant à montrer le résultat de la comparaison sur un dispositif d'affichage ou un moyen d'impression.

15. Un programme d'ordinateur chargeable directement dans la mémoire interne d'un ordinateur capable d'être un système de téléphone d'un téléphone fixe ou une connexion fixe de réseau de données comprenant des parties de code logiciel pour exécuter les étapes de l'une quelconque des reindivicacións 10 à 14 lorsque le dit produit est exécuté sur un ordinateur ou similaires moyens de traitement de données.
